# NEUE EUROPÄISCHE PATENTSCHRIFT

(11) **EP 0 780 561 B2**
(45) Veröffentlichungstag und Bekanntmachung des Hinweises auf die Entscheidung über den Einspruch: **20.06.2007**
(45) Hinweis auf die Patenterteilung: 24.03.1999
(21) Anmeldenummer: 96120315.5
(22) Anmeldetag: 18.12.1996
(51) Int. Cl.: F02F 11/00

(54) **Zylinderkopfdichtung**
Cylinder head gasket
Joint de culasse

(30) Priorität: 23.12.1995 DE 19548572
(43) Veröffentlichungstag der Anmeldung: 25.06.1997
(73) Patentinhaber: ElringKlinger AG, 72581 Dettingen (DE)
(72) Erfinder: Dickhaut-Koop, Reinhard, Dr., 65510 Idstein (DE); Werz, Ulrich, 72581 Dettingen (DE); Griesingen, Eberhard, 72574 Bad Urach (DE)
(74) Vertreter: Röhl, Wolf Horst

(56) Entgegenhaltungen:
- EP-A- 0 306 766
- EP-A- 0 544 951
- EP-A- 0 627 581
- EP-A- 0 633 396
- EP-A- 0 695 896
- DE-A- 4 219 709
- DE-A- 4 438 879
- DE-C- 19 513 361
- DE-C- 19 520 695
- JP-A- 4 191 570
- Alfred Weiss : "Mehrlagenstahl-Zylinderkopfdichtungen für die Kraftfahrzeugindustrie"
- MTZ Motortechnische Zeitschrift Nr. 1, 1994, P. Grosch, J. Ludwig

## Beschreibung

Die Erfindung betrifft eine Zylinderkopfdichtung nach dem Oberbegriff des Anspruchs 1.

Aus der EP 0 306 766 C1 bzw. der EP 0 230 804 C1 ist eine derartige mehrlagige metallische Zylinderkopfdichtung für eine Brennkraftmaschine bekannt, bei der zwei gesickte Deckbleche zusammen mit einem Bördelblech und gegebenenfalls einem Trägerblech vorgesehen sind, wobei das Bördelblech durch seine Umbördelung längs der Brennkammeröffung einen Federwegbegrenzer für die Sicken bildet.

Derartige bekannte, mehrlagige Zylinderkopfdichtungen zeigen nach ihrem Einbau insbesondere in mehrventiligen Motoren, die über Zylinderköpfe mit vergleichsweise geringer Steifigkeit verfügen, entlang des jeweiligen Brennkammerumfangs folgendes Bild:
- Im Bereich der Zylinderkopfschrauben wird die Dichtung infolge der Schraubenvorspannung durch hohe Druckkräfte zusammengepreßt, die Sicken benachbart zur Brennkammer werden höchstzulässig bis auf Höhe des Federwegbegrenzers eingefedert.
- Im Bereich zwischen den Zylinderkopfschrauben ist die Pressung infolge der Nachgiebigkeit der die Dichtung verspannenden Bauteile geringer, der Abfall der Pressung ist umso größer, je niedriger z.B. die Biegesteifigkeit des Zylinderkopfs im betrachteten Abschnitt ist.

Die über den Brennkammerumfang unterschiedliche Pressung kann dazu führen, daß die Sicken benachbart zur Brennkammer auch im ungefeuerten Zustand der Brennkraftmaschine teilweise vollständig oder nahezu vollständig ausfedern, so daß dann beim Motorbetrieb eine einwandfreie, dauerhafte Abdichtung deshalb nicht mehr gewährleistet ist, weil der aktuelle Arbeitsbereich der Sicken nicht dem ursprünglich festgelegten entspricht bzw. die erforderliche Dichtkraft und/oder Dauerhaltbarkeit wegen zu starker Ausfederung der Sicken nicht mehr gegeben sind.

Um die Pressungsverteilung über den Brennkammerumfang zu beeinflußen, ist es aus der DE 42 19 709 A1 bekannt, bei einer ein Zwischenelement mit einem Trägerblech und zwei gesickte Deckbleche umfassenden metallischen Zylinderkopfdichtung das Zwischenelement im Bereich um die Brennkammeröffnung radial innenseitig von den Sicken der Deckbleche entsprechend zu profilieren. Dies hat jedoch den Nachteil, daß sich die Profilierung an theoretischen Überlegungen und Berechnungen orientiert, während Toleranzen, die in der Praxis zwangsläufig auftreten, nicht berücksichtigt werden können.

Aufgabe der Erfindung ist es, eine Zylinderkopfdichtung nach dem Oberbegriff des Anspruchs 1 zu schaffen, bei der die Pressungsverteilung über den Brennkammerumfang entsprechend den tatsächlichen Verhältnissen vergleichmäßigt wird.

Diese Aufgabe wird entsprechend dem kennzeichnenden Teil des Anspruchs 1 gelöst.

Die angestrebte Vergleichmäßigung der Pressungsverteilung bedeutet im Bereich der Zylinderkopfschrauben eine Begrenzung der Pressung auf einen auszulegenden Höchstwert und im Bereich zwischen den Zylinderkopfschrauben einen vergleichsweise geringeren Pressungabfall. Beides wird durch Vorsehen eines elastisch verformbaren Federwegbegrenzers erreicht, so daß bei Montage der Zylinderkopfdichtung eine definierte elastische Verformung dieses Federwegbegrenzers im Zylinderkopfschraubenbereich bei Erreichen des auslegungsgemäßen Pressungshöchstwertes eintritt. Auf diese Weise stellt sich die Zylinderkopfdichtung quasi von selbst auf die Steifigkeits- und Kräfteverhältnisse ein und bewirkt in Bereichen hoher Bauteilsteifigkeiten durch Begrenzung der Pressung zudem eine Verringerung der Gefahr von Eingrabungen im Zylinderkopf. In Bereichen niedrigerer Bauteilsteifigkeiten ergibt sich eine vergleichsweise größere Verformung der die Zylinderkopfdichtung verspannenden Bauteile mit der Folge einer erhöhten Pressung.

Auch im Hinblick auf den zu beobachtenden Schwingungsreibverschleiß ist die Vergleichmäßigung der Pressungsverteilung günstig. Bei vergleichbarem Reibbeiwert verringert die höhere Pressung die horizontale Dynamik der Zylinderkopfdichtung.

Weitere Ausgestaltungen der Erfindung sind der nachfolgenden Beschreibung und den Unteransprüchen zu entnehmen.

Die Erfindung wird nachstehend anhand eines in der beigefügten Abbildung dargestellten Ausführungsbeispiels näher erläutert.

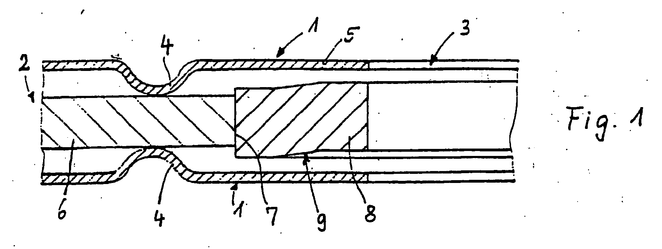

Fig. 1 zeigt schematisch und ausschnittweise Schnitte eine Ausführungsform einer Zylinderkopfdichtung.

Die in Fig. 1 dargestellte Zylinderkopfdichtung umfaßt zwei Deckbleche 1 mit einem hierzwischen angeordneten Zwischenelement 2. Die Deckbleche 1 und das Zwischenelement 2 weisen eine Reihe von öffnungen 3 entsprechend den Brennkammern der zugehörigen Brennkraftmaschine sowie nicht dargestellte Schraubendurchtrittslöcher für Zylinderkopfschrauben und üblicherweise ebenfalls nicht dargestellte Durchtrittsöffnungen für Kühlwasser bzw. öl auf.

Die gewöhnlich aus Federstahl hergestellten und ansonsten planen Deckbleche 1 sind mit Sicken 4 versehen, die mit Abstand unter Belassung eines geraden Blechabschnitts 5 im Randbereich der öffnung 3 angeordnet und zum Zwischenelement 2 gerichtet sind. Die Deckbleche 1 sind spiegelsymmetrisch zueinander angeordnet.

Das Zwischenelement 2 umfaßt ein planes Trägerblech 6, in dessen Öffnungen 7, die koaxial zu den Öffnungen 3 angeordnet sind, ringförmige Federwegbegrenzer 8 von größerer Stärke als diejenigen des Trägerblechs 6 eingelegt sind, die mit einer umlaufenden Kröpfung 9 versehen sind. Das gewünschte Werkstoffverhalten (hohe Steifigkeit) wird hierbei durch Abstimmung des Kröpfungswinkels erhalten.

Der Federwegbegrenzer 8 wird zweckmäßigerweise jeweils im wesentlichen mittig zwischen den Deckblechen 1 angeordnet.

Die Oberflächen der Deckbleche 1 und gegebenenfalls der übrigen Bleche 6, 10 werden gewöhnlich mit einer dünnen Elastomerbeschichtung in einer Stärke etwa entsprechend der Rauheit der zu verspannenden Bauteile versehen, um eine Mikroabdichtung zu gewährleisten.

## Patentansprüche

1. Metallische Zylinderkopfdichtung für eine Brennkraftmaschine mit zwei Deckblechen (1), die mit einer oder mehreren nebeneinander angeordneten Öffnungen (3) entsprechend den Brennkammern der Brennkraftmaschine versehen sind, wobei beide Deckbleche (1) um jede Öffnung (3) herum mit Abstand zu dieser unter Belassung eines geraden Blechabschnitts (5) im Öffnungsrandbereich eine zum gegenüberliegenden Deckblech (1) weisende Sicke (4) aufweisen und zwischen den Deckblechen (1) ein Trägerblech (6) umfassendes Zwischenelement (2) angeordnet ist, das einen um jede Öffnung (3) herum radial innenseitig von der jeweiligen Sicke (4) verlaufenden Federwegbegrenzer (8) für die Sicken (4) besitzt, wobei der jeweilige Federwegbegrenzer (8) von größerer Stärke als das Trägerblech (6) ist, **dadurch gekennzeichnet, daß** der jeweilige Federwegbegrenzer (8) in Richtung des Federwegs der Sicken elastisch verformbar und gekröpft ist.

2. Zylinderkopfdichtung nach Anspruch 1, **dadurch gekennzeichnet, daß** die elastisch verformbaren, ringförmigen Federwegbegrenzer (8) in Öffnungen (7) des Trägerblechs(6) eingesetzt sind.

3. Zylinderkopfdichtung nach Anspruch 1 oder 2, **dadurch gekennzeichnet, daß** der Federwegbegrenzer (8) im wesentlichen symmetrisch zwischen den Deckblechen (1) angeordnet ist.

## Claims

1. Metallic cylinder head gasket for an internal combustion engine with two cover sheets (1), which are provided with one or more openings (3) arranged side by side, corresponding to the combustion chambers of the internal combustion engine, both cover sheets (1) comprising around each opening (3), at a distance from the latter leaving a straight sheet section (5) in the opening edge region, a corrugation (4) pointing towards the opposite cover sheet (1) and located between the cover sheets (1) is an intermediate member (2) comprising a support plate (6), which intermediate member comprises a spring deflection limiter (8) for the corrugations (4), which limiter extends around each opening (3) radially on the inside from the respective corrugation (4), **characterised in that** the respective spring deflection limiter (8) is elastically deformable in the direction of the spring deflection of the corrugations.

2. Cylinder head gasket according to Claim 1, **characterised in that** the elastically deformable, annular spring deflection limiters (8) are inserted in openings (7) in the support plate (6).

3. Cylinder head gasket according to Claim 1 or 2, **characterised in that** the spring deflection limiter (8) is located substantially symmetrically between the cover sheets (1).

## Revendications

1. Joint de culasse métallique pour un moteur à combustion interne, comportant deux tôles de recouvrement (1), qui sont munies d'un seul ou de plusieurs orifices (3) disposés côte à côte compte tenu du nombre des chambres de combustion du moteur, les deux tôles de recouvrement (1) présentant autour de chaque orifice (3), à une certaine distance de celui-ci et en respectant une section de tôle rectiligne (5) dans la région du bord de l'orifice, une gorge (4) orientée vers la tôle (1) lui faisant face, ainsi qu'un élément intermédiaire (2), entourant une tôle support (6), étant disposé entre lesdites tôles de recouvrement (1), cet élément intermédiaire (2) possédant un limiteur (8) de l'allongement élastique des gorges (4) placé radialement autour de chaque orifice (3) à l'intérieur de la gorge (4) respective, **caractérisé en ce que** le limiteur (8) respectif est élastiquement déformable en direction de l'allongement élastique des gorges.

2. Joint de culasse selon la revendication 1, **caractérisé en ce que** les limiteurs (8), élastiquement déformables, de forme circulaire, sont insérés dans des orifices (7) de ladite tôle support (6).

3. Joint de culasse selon des revendications 1 ou 2, **caractérisé en ce que** le limiteur (8) de l'allongement élastique est disposé de manière sensiblement symétrique entre les tôles de recouvrement (1).
